# EUROPÄISCHE PATENTANMELDUNG

(11) **EP 4 653 224 A1**
(43) Veröffentlichungstag der Anmeldung: **26.11.2025**
(21) Anmeldenummer: 24221557.2
(22) Anmeldetag: 19.12.2024
(51) Int. Cl.: B60K 28/06, B60W 40/08, B60W 50/14

(54) **VERFAHREN ZUR UMSETZUNG EINES ALKOHOLTESTS FÜR EINEN NUTZER EINES FAHRZEUGS SOWIE FAHRZEUGANORDNUNG**

(30) Priorität: 24.05.2024 DE 102024114668
(71) Anmelder: Bayerische Motoren Werke Aktiengesellschaft, 80809 München (DE)
(72) Erfinder: Ceylan, Adem, 80992 München (DE); Knott, Thorsten, 83104 Tuntenhausen (DE)

(57) **Zusammenfassung**

Die Erfindung betrifft eine Verfahren zur Umsetzung eines Alkoholtests für einen Nutzer eines Fahrzeugs 5, wobei auf Basis von einem digitalen Besitzerschlüssel 4 des Fahrzeugs 5 ein digitaler Freundschlüssel 7 mit Schlüsselergänzungsdaten erzeugt wird, wobei die Schlüsselergänzungsdaten des digitalen Freundschlüssels 7 die Aktivierung einer Alkoholtestfunktion 10 beschreiben oder darauf referenzieren, wobei bei einer Benutzung des Fahrzeugs 5 mit dem digitalen Freundschlüssel 7 die Alkoholtestfunktion 10 aktiviert wird, wobei bei der Aktivierung der Alkoholtestfunktion 10 ein Alkoholtest des Nutzers mit dem Freundschlüssel 7 durchgeführt wird, wobei das Fahrzeug 5 in Abhängigkeit des Alkoholtests in einen Freigabezustand oder in einen Sperrzustand versetzt wird.

## Beschreibung

Die Erfindung betrifft ein Verfahren zur Umsetzung eines Alkoholtests für einen Nutzer eines Fahrzeugs sowie eine Fahrzeuganordnung zur Umsetzung des Verfahrens.

Ein Alkoholtest bei Fahrzeugen beim Fahrzeugstart wird durchgeführt, indem ein Gerät verwendet wird, das den Fahrer auf Alkoholkonsum überprüft, bevor das Fahrzeug gestartet werden kann. Diese Technologie wird als Alkohol-Interlock-System bezeichnet und ist in einigen Ländern obligatorisch, insbesondere für Personen, die wegen Alkohol am Steuer verurteilt wurden oder für Fahrer, die unter Verdacht stehen, unter Alkoholeinfluss zu fahren.

Das Alkohol-Interlock-System ist ein Gerät, das in das Fahrzeug eingebaut wird und den Fahrer vor dem Starten des Motors dazu zwingt, in ein Mundstück zu blasen, um seinen Alkoholgehalt zu messen. Wenn der gemessene Alkoholgehalt über einem bestimmten Schwellenwert liegt, wird das Fahrzeug nicht gestartet. Diese Maßnahme soll sicherstellen, dass Personen, die alkoholisiert sind, nicht fahren können und somit die Sicherheit auf den Straßen erhöht wird.

Die Druckschrift US 2021061226 A1 offenbart ein Verfahren, wobei ein Fahrzeug bereitgestellt wird, welches ein digitales Schlüsselsystem aufweist, das ein Ergebnis einer Alkoholkonsum-Authentifizierung von einem Benutzerterminal empfängt, in dem mindestens eine Anwendung installiert ist, und ein Motormanagementsystem, das ein Steuersignal zum Aktivieren oder Deaktivieren des Motorantriebs des Fahrzeugs basierend auf dem Ergebnis erzeugt. Ein Steuergerät empfängt ein Ergebnis für einen Alkoholkonsumstatus eines ersten Fahrers auf der Grundlage der vom Benutzerendgerät durchgeführten Alkoholkonsum-Authentifizierung und leitet einen Anruf an einen zweiten Fahrer ein, wenn festgestellt wird, dass sich der erste Fahrer im Alkoholkonsumstatus befindet.

Der Erfindung liegt die Aufgabe zugrunde, ein Fahrzeug gegen ein Fahren unter Alkoholeinfluss praxisnah zu schützen.

Diese Aufgabe wird durch ein Verfahren mit den Merkmalen des Anspruchs 1 und durch eine Fahrzeuganordnung mit den Merkmalen des Anspruchs 11 gelöst. Bevorzugte oder vorteilhafte Ausführungsformen der Erfindung ergeben sich aus den Unteransprüchen, der nachfolgenden Beschreibung und/oder den beigefügten Figuren.

Gegenstand der Erfindung ist ein Verfahren zur Umsetzung eines Alkoholtests für einen Nutzer eines Fahrzeugs. Das Fahrzeug kann insbesondere als ein Personenkraftwagen, Lastkraftwagen oder Bus ausgebildet sein. Alternativ hierzu kann das Fahrzeug auch als ein Zweirad, insbesondere Motorrad, oder Dreirad realisiert sein. Der Nutzer ist insbesondere als ein Fahrer des Fahrzeugs ausgebildet.

Auf Basis von einem digitalen Besitzerschlüssel des Fahrzeugs wird ein digitaler Freundschlüssel mit Schlüsselergänzungsdaten erzeugt. Insbesondere ist eine Fahrzeuganordnung vorgesehen, wobei die Fahrzeuganordnung das Fahrzeug sowie mindestens ein mobiles Endgerät umfasst. Auf der Fahrzeuganordnung ist ein Schlüsselsystem lauffähig angeordnet. Das Schlüsselsystem kann insbesondere nach CCC-Vorgaben, im Speziellen mindestens nach Release 3.0 ausgebildet sein. Das mobile Endgerät und das Fahrzeug weisen insbesondere eine Softwarestruktur zur Umsetzung des Schlüsselsystems, insbesondere ein Ecosystem auf, welches aus einer Anzahl an Softwarelösungen, die die die Aktivitäten und Transaktionen der Akteure organisiert, nach CCC-Vorgaben zur Schlüsselverwaltung und zur Bereitstellung von schlüsselbasierten Diensten, wie z.B. die gesicherte Kommunikation, Schlüsselverwaltung mit Nutzerprofilverwaltung und/oder Schlüsselortung besteht.

Auf Basis des digitalen Besitzerschlüssels kann der digitale Freundschlüssel erzeugt und autorisiert werden. In Bezug auf die CCC-Vorgaben wird der digitale Besitzerschlüssel als "Owner Key" und der digitale Freundschlüssel als "Friend Key" bezeichnet. Die Begriffe "Besitzer" und "Freund" sind somit als Rechteinhaber und -vergeber oder Hauptnutzer oder Master und Rechteempfänger bzw. Nutzer oder Slave zu verstehen, insbesondere impliziert der Begriff "Freund" keine soziale Verbindung. Nachfolgend wird zur Unterscheidung der "Besitzer" als Besitzer und der "Freund" als Nutzer bezeichnet.

Der digitale Besitzerschlüssel und/oder der digitale Freundschlüssel ist als ein digitaler Schlüssel ausgebildet, welcher Funktionen des Fahrzeugs autorisiert. Die Funktionen können beispielsweise ein Öffnen oder Starten des Fahrzeugs umfassen. Insbesondere wird der digitale Besitzerschlüssel und/oder der Freundschlüssel auf einem mobilen Endgerät gespeichert. Hierzu kann das mobile Endgerät eine Wallet oder ein Secure Element aufweisen, wobei der digitale Besitzerschlüssel oder der Freundschlüssel in dem Wallet bzw. in dem Secure Element gespeichert ist. Es ist bevorzugt vorgesehen, dass zu jedem Fahrzeug nur genau ein digitaler Besitzerschlüssel vorgesehen ist.

Durch die Erzeugung des digitalen Freundschlüssels auf Basis des digitalen Besitzerschlüssels kann der digitale Freundschlüssel für die Umsetzung von Funktionen in dem Fahrzeug autorisiert werden. Insbesondere können die Funktionen so autorisiert werden, dass diese zwingend umgesetzt werden. Die Autorisierung erfolgt insbesondere durch Schlüsselergänzungsdaten. Bei den CCC-Vorgaben werden die Schlüsselergänzungsdaten insbesondere als Eigenschaften, Attribute oder Autorisierungen des digitalen Freundschlüssels bezeichnet.

Die Schlüsselergänzungsdaten des digitalen Freundschlüssels beschreiben die Aktivierung einer Alkoholtestfunktion. Alternativ wird auf die Alkoholtestfunktion oder deren Beschreibung referenziert. Optional können die Schlüsselergänzungsdaten des digitalen Freundschlüssels einen Grenzwert für einen zulässigen Alkoholzustand des Nutzers des Freundschlüssels definieren. Diese können von dem Besitzer des Besitzerschlüssels vorgegeben werden

Die Alkoholtestfunktion beschreibt die insbesondere zwingende Umsetzung eines Alkoholtests des Fahrers. Insbesondere wird bei dem Alkoholtest der aktuelle Alkoholzustand des Nutzers erfasst und bewertet. Die Erfassung kann beispielsweise durch eine Atemalkoholmessung durchgeführt werden, wobei von dem Nutzer der Alkoholgehalt im Atem gemessen wird und auf den Alkoholzustand des Nutzers geschlossen wird. Prinzipiell sind auch andere Alkoholtests möglich. Bei der Bewertung wird der Alkoholzustand des Nutzers mit einem vorgebbaren Alkoholzustand verglichen. Beispielsweise ist ein Kennwert des Alkoholzustands ein "Promille-Wert", also eine Blutalkoholkonzentration (BAK) als Maß für die Menge von Alkohol im Blut, welche üblicherweise in Gewichtsanteilen als g/kg (Promille) angegeben wird. Beispielsweise kann ein Grenzwert über die Schlüsselergänzungsdaten vorgegeben oder ein gesetzlicher Grenzwert verwendet werden. Soweit der Alkoholzustand den vorgebbaren Alkoholzustand übersteigt, wird der Alkoholtest nachfolgend als "positiv", andernfalls als "negativ" bezeichnet.

Es ist vorgesehen, dass bei einer Benutzung des Fahrzeugs mit dem digitalen Freundschlüssel, wie zum Beispiel bei einem Aufsperren des Fahrzeugs oder bei einem versuchten Starten des Fahrzeugs, die Alkoholtestfunktion insbesondere zwingend aktiviert wird. Insbesondere ab diesem Zeitpunkt wird der Alkoholtest durchgeführt oder wird der Nutzer angewiesen, den Alkoholtest durchzuführen.

Es ist vorgesehen, dass in Abhängigkeit des Ergebnisses des Alkoholtests das Fahrzeug gesperrt oder freigegen wird. Bei einem positiven Alkoholtest wird das Fahrzeug insbesondere automatisiert in einen Sperrzustand versetzt, wobei beispielsweise eine Wegfahrsperre aktiviert wird. Bei einem negativen Alkoholtest wird das Fahrzeug in einen Freigabezustand versetzt, so dass der Nutzer mit dem digitalen Freundschlüssel das Fahrzeug starten und/oder fahren kann.

Es ist ein Vorteil der vorliegenden Erfindung, dass eine flexible und einfach zu integrierende Ausführung für die zwingende Umsetzung eines Alkoholtests zumindest für den Nutzer mit dem Freundschlüssel geschaffen wird. Durch die Möglichkeit, die Alkoholtestfunktion als integralen Bestandteil oder einer integralen Vorgabe eines digitalen Freundschlüssels umzusetzen, kann ein Besitzer mit einem Besitzerschlüssel - unabhängig von gesetzlichen Vorgaben - eigene Vorgaben hinsichtlich der Alkoholtestfunktion praxisnah realisieren. So ist es beispielsweise denkbar, dass in manchen Ländern ein gewisser Alkoholzustand zulässig ist, jedoch der Besitzer des Besitzerschlüssels für "sein" Fahrzeug strengere Regeln aufstellen möchte und daher eine Alkoholtestfunktion mit dem Freundschlüssel verbindet, welche beispielsweise nur geringere Alkoholgrenzen als gesetzlich vorgeschrieben toleriert und andernfalls das Fahrzeug gesperrt wird. Dabei hilft das Verfahren Vorgaben des Besitzers des digitalen Besitzerschlüssels praxisnah umzusetzen, welche durch starre Alkohol-Interlock-Systeme nicht umgesetzt werden können.

Bei einem negativen Alkoholtest wird insbesondere ein Starten und/oder Fahren des Fahrzeugs ermöglicht. Bei einem positiven Alkoholtest, also bei einem Alkoholzustand, welcher eine stärkere Alkoholisierung als der vorgegebene Alkoholzustand darstellt, wird das Starten und/oder das Fahren des Fahrzeugs gesperrt. Ferner wird bevorzugt u.a. eine Wegfahrsperre und/oder eine Manövriersperre des Fahrzeugs aktiviert, insbesondere so dass jegliche Manipulation des Fahrzeugs unter Alkoholeinfluss verhindert ist, um auf diese Weise auch den alkoholisierten Nutzer mit dem digitalen Freundschlüssel vor einer gesetzeswidrigen Handlung zu bewahren.

Es kann jedoch vorgesehen sein, dass in dem Sperrzustand Übernachtungsfunktionen des Fahrzeugs aktiviert werden. So kann beispielsweise unabhängig von dem Alkoholzustand ein Öffnen des Fahrzeugs ermöglicht sein, um dem alkoholisierten Nutzer zumindest eine Übernachtungsmöglichkeit oder eine Rastmöglichkeit zu geben. Ferner können Komfortfunktionen, wie zum Beispiel das Audiosystem oder eine Telefonanlage aktiviert werden, so dass die Wartezeit für den alkoholisierten Nutzer angenehm gestaltet wird.

Bei einer möglichen Ausgestaltung der Erfindung ist die Alkoholtestfunktion durch die Schlüsselergänzungsdaten definiert. Hierbei kann vorgesehen sein, dass alle notwendigen Parameter für die Alkoholtestfunktion und die Bewertung des Alkoholzustands in den Schlüsselergänzungsdaten abgelegt sind.

Alternativ hierzu ist es möglich, dass die Schlüsselergänzungsdaten auf ein Nutzerprofil für das Fahrzeug in dem Schlüsselsystem verweisen, wobei die Alkoholtestfunktion in dem Nutzerprofil definiert ist. So kann zum Beispiel ein Nutzerprofil für eine kontrollierte Benutzung des Fahrzeugs umfassend die Alkoholtestfunktion abgelegt sein, wobei über die Schlüsselergänzungsdaten dieses Nutzerprofil aktiviert wird.

Bei einer möglichen Ausgestaltung der Erfindung wird der Alkoholtest mit einem Alkoholtestgerät durchgeführt, welches in dem Fahrzeug integriert ist. Auf diese Weise ist sichergestellt, dass keine Manipulationen der Alkoholtestfunktion erfolgen können. Insbesondere wird durch die Schlüsselergänzungsdaten ein integriertes Alkohol-Interlock-System bei der Benutzung des Fahrzeugs mit dem digitalen Freundschlüssel aktiviert, welches bei einem positiven Alkoholtest das Fahrzeug in den Sperrzustand überführt.

Bei einer bevorzugten Weiterbildung der Erfindung ist der digitale Freundschlüssel auf einem oder dem mobilen Endgerät gespeichert. Wie bereits erläutert kann das mobile Endgerät eine wallet oder ein secure element aufweisen, in dem der digitale Freundschlüssel gespeichert ist. Es bevorzugt vorgesehen, dass das mobile Endgerät das Alkoholtestgerät bildet oder mit diesem datentechnisch verbunden ist.

Der Fall, dass das mobile Endgerät das Alkoholtestgerät bildet oder dieses in dem mobilen Endgerät integriert ist, führt zu dem Vorteil, dass das Alkoholtestgerät bei einer möglichen Ausgestaltung nur in Verbindung mit dem digitalen Freundschlüssel freigeschaltet werden kann. Auf diese Weise können Manipulationen der Alkoholtestfunktion reduziert oder verhindert werden.

Alternativ hierzu ist das mobile Endgerät mit dem Alkoholtestgerät datentechnisch gekoppelt, wobei bei einer möglichen Ausgestaltung die Verbindung zu dem gekoppelten Alkoholtestgerät über den digitalen Freundschlüssel aufgebaut und/oder autorisiert werden muss, um eine Manipulation zu verhindern.

Besonders bevorzugt ist das mobile Endgerät als Handy, Smartphone, Tablet, wearable etc. ausgebildet. Besonders bevorzugt ist das mobile Endgerät als eine Smart Watch realisiert, wobei die Smart Watch eine Sensoreinrichtung zur Erfassung des Alkoholzustands, insbesondere das Atemalkoholgehalts, als Alkoholtestgerät aufweist. Durch die Integration des Alkoholtestgerät in das mobile Endgerät, insbesondere in die Smart Watch, können Manipulationen der Alkoholtestfunktion verhindert oder ausgeschlossen werden.

Insbesondere wird eine gesicherte Verbindung insbesondere in dem Fahrzeugsystem und/oder in der Fahrzeuganordnung zwischen dem Fahrzeug und dem mobilen Endgerät auf Basis des digitalen Freundschlüssels aufgebaut, wobei das Ergebnis des Alkoholtests über die sichere Verbindung übertragen wird. Die gesicherte Verbindung kann z.B. über Verschlüsselung, Authentifizierung, Integritätsprüfung und/oder abgesicherte Kommunikationsprotokolle, insbesondere nach CCC-Vorgaben umgesetzt werden. Auf diese Weise wird sichergestellt, dass das Ergebnis des Alkoholtests durch das mobile Endgerät übertragen wird, welches den digitalen Freundschlüssel aufweist.

Die gesicherte Verbindung wird bevorzugt ausschließlich ortsgebunden über Bluetooth, UWB, BLE und/oder NFC etabliert werden. Die ortsgebundene Kommunikation hat den Vorteil, dass das mobile Endgerät in der unmittelbaren Nähe des Fahrzeugs sein kann, um eine Manipulation zu verhindern. Der eine Kommunikationspartner ist das mobile Endgerät, der andere Kommunikationspartner ist das Fahrzeug, welches hierfür eine digitale Datenverarbeitungseinrichtung mit entsprechenden Schnittstellen aufweist. Die digitale Datenverarbeitungseinrichtung kann beispielsweise eine Fahrzeugdienstumgebung mit Apps aufweisen, wobei die Fahrzeugdienstumgebung ein Betriebssystem aufweisen kann.

Bei einer möglichen Weiterbildung der Erfindung wird bei der Alkoholtestfunktion mit einem positiven Alkoholtest dem Nutzer des Fahrzeugs mit dem digitalen Freundschlüssel und/oder dem Besitzer des digitalen Besitzerschlüssels das Ergebnis des Alkoholtests gemeldet und/oder angezeigt. Beispielsweise wird dem Nutzer des Fahrzeugs mit dem digitalen Freundschlüssel das Ergebnis auf dem mobilen Endgerät oder auf einem Display in dem Fahrzeug angezeigt. Dem Besitzer des digitalen Besitzerschlüssels kann eine digitale Nachricht übermittelt werden, wie zum Beispiel eine Mail, eine SMS, eine WhatsApp oder eine Nachricht in dem Schlüsselsystem etc.

Ein weiterer Gegenstand der Erfindung betrifft eine Fahrzeuganordnung, insbesondere ausgebildet zur Umsetzung des zuvor beschriebenen Verfahren. Die Fahrzeuganordnung weist das Fahrzeug auf. Ferner weist die Fahrzeuganordnung einen digitalen Benutzerschlüssel und einen digitalen Freundschlüssel mit Schlüsselergänzungsdaten auf, wobei der digitale Freundschlüssel auf Basis von dem digitalen Besitzerschlüssel des Fahrzeugs erzeugt ist, wobei die Schlüsselergänzungsdaten des digitalen Freundschlüssels die Aktivierung einer Alkoholtestfunktion beschreibt oder darauf referenziert, wobei bei der Aktivierung der Alkoholtestfunktion ein Alkoholtest eines Fahrzeugnutzers durchgeführt wird, wobei das Fahrzeug in Abhängigkeit des Alkoholtests in einen Freigabezustand oder in einen Sperrzustand versetzt wird. Insbesondere umfasst die Fahrzeuganordnung mobile Endgeräte, wobei die digitalen Schlüssel auf den mobilen Endgeräten gespeichert sind.

Alternativ oder ergänzend ausgedrückt berücksichtigt die Erfindung die Tatsache, dass die Zahl der Fahrzeuge mit einem Digital Key dramatisch zunimmt. Dies ist auf den neuen Standard für digitale Autoschlüssel zurückzuführen, der auf der CCC-Spezifikation basiert. Der digitale Schlüssel kann über verschiedene "Sharing-Kanäle" mit anderen Personen geteilt werden. Die Teilung des Fahrzeugschlüssels ermöglicht dem Empfänger eines geteilten Schlüssels als Freundschlüssel die Nutzung des Fahrzeugs. Der Fahrzeugeigentümer behält die Kontrolle, da er die geteilten Schlüssel jederzeit löschen kann. Der Eigentümer kann beim Teilen des Schlüssels entscheiden, ob der Empfänger die "volle Nutzung" des Fahrzeugs erhält oder der Schlüssel mit Einschränkungen (Fahrzeuggeschwindigkeit und Audiolautstärke) geteilt wird. Bei der digitalen Schlüsselübergabe hat der Fahrzeughalter bislang keine Möglichkeit, die Fahrzeugbenutzung zu untersagen, wenn der Empfänger unter Alkoholeinfluss steht. Der Fahrzeughalter erhält die Möglichkeit, anderen zu verbieten, sein Fahrzeug unter Alkoholeinfluss zu benutzen.

Der Empfänger des digitalen (Freund-)Schlüssels ist verpflichtet, vor jeder Fahrt einen Alkoholtest durchzuführen. Je nach Alkoholgehalt wird der Motor dann gestartet oder nicht gestartet. Der Alkoholgehalt kann zukünftig z.B. über die Smart Watch gemessen werden. Wenn der gesetzlich erlaubte oder der vorgegebene Alkoholpegel überschritten wird, wird der Motorstart verhindert. Die Kommunikation zwischen der Smart Watch und dem Fahrzeug erfolgt über BLE oder NFC. Bei BLEfähigen Fahrzeugen werden die Informationen über BLE übertragen, während bei NFC-fähigen Fahrzeugen die Übertragung über NFC erfolgt. Die Daten betreffen den Alkoholgehalt, und wenn dieser den gesetzlich erlaubten oder vorgegebenen Rahmen überschreitet, wird der Motor des Fahrzeugs nicht gestartet. Der Kunde erhält auf seiner Watch sowie im Fahrzeug (HMI) eine Anzeige, dass sein Alkoholpegel zu hoch ist und eine Fahrt mit dem Fahrzeug daher nicht möglich ist.

Weitere Merkmale, Vorteile und Wirkungen der Erfindung ergeben sich aus der nachfolgenden Beschreibung bevorzugter Ausführungsbeispiele der Erfindung. Dabei zeigen:

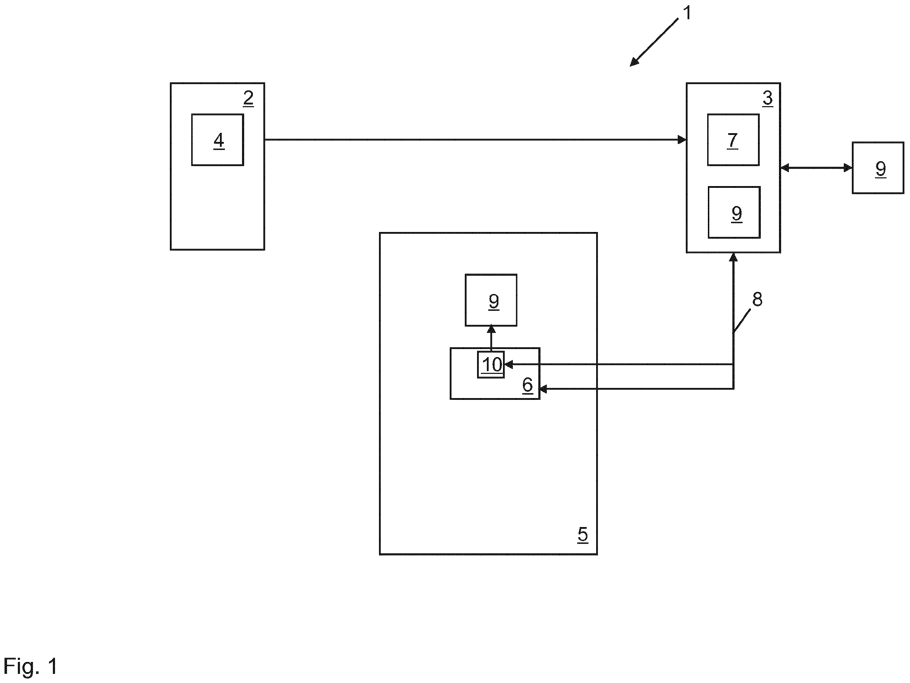

- Figur 1: ein schematisches Blockdiagramm von einer Fahrzeuganordnung als ein Ausführungsbeispiel der Erfindung.

Die Figur 1 zeigt in einer schematischen Blockdarstellung eine Fahrzeuganordnung 1 als ein Ausführungsbeispiel der Erfindung und zur Darstellung von einem Ausführungsbeispiel des Verfahrens.

Die Fahrzeuganordnung 1 weist zwei mobile Endgeräte 2, 3 auf, wobei die mobilen Endgeräte 2, 3 beispielsweise als Smartphones ausgebildet sind. Das mobile Endgerät 2 weist einen digitalen Besitzerschlüssel 4 auf und ist somit einem Besitzer zugeordnet. Der digitale Besitzerschlüssel 4 ist beispielsweise auf einem Secure Element oder einer Wallet auf dem mobilen Endgerät 2 gespeichert. Statt auf dem mobilen Endgerät 2 kann der digitale Besitzerschlüssel 4 auf einer anderen Datenverarbeitungseinrichtung gespeichert sein, welche die gleichen Funktionen in Bezug auf das Verfahren wie das mobile Endgerät 2 aufweist und statt diesem verwendet werden kann.

Die Fahrzeuganordnung 1 umfasst ein Fahrzeug 5, wobei das Fahrzeug 5 eine Fahrzeugdienstumgebung auf einer elektronischen Datenverarbeitungseinrichtung 6 aufweist. Die Fahrzeugdienstumgebung kann beispielsweise als ein Betriebssystem mit Apps ausgebildet sein. Auf den mobilen Endgeräten 2, 3 und dem Fahrzeug 5, insbesondere der digitalen Datenverarbeitungseinrichtung 6, im Speziellen der Fahrzeugdienstumgebung, ist ein Schlüsselsystem ablauffähig implementiert. Das Schlüsselsystem kann beispielsweise nach CCC-Vorgaben ausgebildet sein.

Das mobile Endgerät 2 weist eine App oder eine Wallet auf, welche ausgebildet ist, auf Basis des digitalen Benutzerschlüssels 4 einen digitalen Freundschlüssel 7 zu erzeugen und zu autorisieren. Der digitale Freundschlüssel 7 wird auf das mobile Endgerät 3 eines Nutzers übertragen. Die Übertragung erfolgt derart, dass der digitale Freundschlüssel 7 autorisiert auf dem mobilen Endgerät 3 gespeichert wird. Beispielsweise wird der digitale Freundschlüssel 7 in einer Wallet oder auf einem Secure Element auf dem mobilen Endgerät 3 gespeichert.

Der digitale Freundschlüssel 7 kann mit der Fahrzeugdienststruktur der digitalen Datenverarbeitungseinrichtung 6 eine gesicherte Verbindung 8 aufbauen. Die gesicherte Verbindung 8 wird über den digitalen Freundschlüssel 7 autorisiert. Die gesicherte Verbindung 8 erfolgt insbesondere über BLE, UWB und optional ergänzend über NFC. Die gesicherte digitale Verbindung 8 erfolgt insbesondere nach den CCC-Vorgaben und/oder ist als eine standardisierte Verbindung nach CC-Vorgaben ausgebildet.

Auf den digitalen Schlüsseln 4, 7 sind über Schlüsselergänzungsdaten Rechte oder Autorisierungen zur Nutzung von Funktionen des Fahrzeugs 5 hinterlegt. So können die Funktionen beispielsweise ein Starten des Fahrzeugs 5, ein Öffnen des Fahrzeugs 5 etc. umfassen. Der digitale Besitzerschlüssel 4 weist dabei insbesondere alle Rechte oder Autorisierungen auf. Insbesondere weist der digitale Besitzerschlüssel 4 das Recht auf, derartige digitale Freundschlüssel 7 zu erzeugen und autorisiert zu verteilen.

Das mobile Endgerät 2 (oder die Datenverarbeitungseinrichtung) erzeugt den digitalen Freundschlüssel 7, wobei in den Schlüsselergänzungsdaten eine Alkoholtestfunktion 10 beschrieben, insbesondere definiert, oder darauf referenziert ist. Die Alkoholtestfunktion 10 ist eine Softwarefunktion oder App der Fahrzeugdienstumgebung auf der digitalen Datenverarbeitungseinrichtung 6

Es ist vorgesehen, dass bei einer Benutzung des Fahrzeugs 5 mit dem digitalen Freundschlüssel 7 die Alkoholtestfunktion 10 durch die Vorgaben in den Schlüsselergänzungsdaten insbesondere automatisch aktiviert wird. Somit erstellt der Besitzer des mobilen Endgeräts 2 mit dem digitalen Besitzerschlüssel 4 den digitalen Freundschlüssel 7, welcher so ausgebildet ist, dass bei einer Aktivierung des Fahrzeugs 5 automatisch die Alkoholtestfunktion 10 gestartet wird.

Die Definition der Alkoholtestfunktion 10 kann zum einen in den Schlüsselergänzungsdaten des digitalen Freundschlüssels 7 definiert sein. Alternativ hierzu referenzieren die Schlüsselergänzungsdaten auf ein Nutzerprofil in der Fahrzeugdienstumgebung und/oder in dem Schlüsselsystem, wobei die Alkoholtestfunktion 10 in dem Nutzerprofil definiert ist. Optional können die Schlüsselergänzungsdaten auch Grenzwerte für die Alkoholtestfunktion 10 umfassen, welche bei einer Bewertung des Alkoholzustands des Nutzers mit dem digitalen Freundschlüssel 7 angewandt werden.

Bei einer Aktivierung der Alkoholtestfunktion 10 wird bei einer Benutzung des Fahrzeugs 5 mit einem Nutzer mit dem digitalen Freundschlüssel 7 automatisiert und/oder zwangsweise ein Alkoholtest durchgeführt und bewertet. Für den Fall, dass der Alkoholtest positiv ist, also ein Alkoholzustand des Nutzers höher ist als gesetzlich oder in den Schlüsselergänzungsdaten vorgegeben, wird das Fahrzeug 5 in einen Sperrzustand überführt, wobei Fahrzeugfunktionen, wie zum Beispiel Starten des Fahrzeugs 5 oder Fahren des Fahrzeugs 5 gesperrt sind. Für den Fall, dass der Alkoholtest negativ ist, wird das Fahrzeug in einen Freigabezustand überführt, wobei Fahrzeugfunktionen, wie zum Beispiel Starten des Fahrzeugs 5 oder Fahren des Fahrzeugs 5 freigegeben sind.

Optional kann das Ergebnis des Alkoholtests auf dem mobilen Endgerät 3 oder auf einem Display in dem Fahrzeug 5 dem Nutzer angezeigt werden und/oder an den Besitzer mit dem digitalen Besitzerschlüssel 4 übermittelt werden.

Bei einem ersten Ausführungsbeispiel ist ein Alkoholtestgerät 9 in dem Fahrzeug 5 integriert, wobei die Alkoholtestfunktion 10 bei der Aktivierung einen Alkoholtest mit dem Alkoholtestgerät 9 durchführt. Das Alkoholtestgerät 9 misst den Alkoholzustand des Nutzers und übergibt das Ergebnis des Alkoholtests an die Alkoholtestfunktion 10. Dieses Ausführungsbeispiel hat den Vorteil, dass eine Manipulation an dem Alkoholtestgerät 9 ausgeschlossen ist.

Bei einem zweiten Ausführungsbeispiel ist das Alkoholtestgerät 9 in dem mobilen Endgerät 3 integriert. Beispielsweise ist das mobile Endgerät 3 als eine Smart Watch ausgebildet, welche eine Sensoreinrichtung aufweist, die das Alkoholtestgerät 9 bildet. Die Alkoholtestfunktion 10 kommuniziert mit dem mobilen Endgerät 3 über die gesicherte Verbindung 8 und fordert einen Alkoholtest durch das Alkoholtestgerät 9 an. Das Ergebnis des Alkoholtests wird über die gesicherte Verbindung 8 an die Alkoholtestfunktion 10 übertragen. Dieses Ausführungsbeispiel hat den Vorteil, dass die Kommunikation zwischen der Alkoholtestfunktion 10 und dem Alkoholtestgerät 9 in dem mobilen Endgerät 3 über die gesicherte Verbindung 8 erfolgt, so dass eine Manipulation an dem Alkoholtestgerät 9 ebenfalls ausgeschlossen ist. Optional kann der digitale Freundschlüssel 7 über eine App in dem mobilen Endgerät 3 verwaltet werden, welche sicherstellt, dass nur Testergebnisse des Alkoholtestgeräts 9 in dem mobilen Endgerät 3 an die Alkoholtestfunktion 10 übertragen werden.

Bei einem dritten Ausführungsbeispiel ist das mobile Endgerät 3 mit dem Alkoholtestgerät 9 datentechnisch verbunden. Das mobile Endgerät 3 kann beispielsweise als ein Handy, Smartphone etc. ausgebildet sein. Das Alkoholtestgerät 9 kann beispielsweise als eine Smart Watch realisiert sein, welche eine Sensoreinrichtung aufweist, die das Alkoholtestgerät 9 bildet. Über die Alkoholtestfunktion 10 wird dann das mobile Endgerät 3 angesteuert, so dass dieses einen Alkoholtest mit dem externen Alkoholtestgerät 9 durchführt und die Testergebnisse des Alkoholtestgeräts 9 an die Alkoholtestfunktion 10 liefert. Optional kann der digitale Freundschlüssel 7 über eine App in dem mobilen Endgerät 3 verwaltet werden, welche sicherstellt, dass nur Testergebnisse des externen Alkoholtestgeräts 9 an die Alkoholtestfunktion 10 übertragen werden.

### Bezugszeichenliste

- 1: Fahrzeuganordnung
- 2: mobiles Endgerät des Besitzers
- 3: mobiles Endgerät des Nutzers
- 4: digitaler Besitzerschlüssel als digitaler Schlüssel des Besitzers
- 5: Fahrzeug
- 6: digitale Datenverarbeitungseinrichtung
- 7: digitaler Freundschlüssel als digitaler Schlüssel des Nutzers
- 8: gesicherte Verbindung/Kommunikation
- 9: Alkoholtestgerät
- 10: Alkoholtestfunktion

## Patentansprüche

1. Verfahren zur Umsetzung eines Alkoholtests für einen Nutzer eines Fahrzeugs (5),
wobei auf Basis von einem digitalen Besitzerschlüssel (4) des Fahrzeugs (5) ein digitaler Freundschlüssel (7) mit Schlüsselergänzungsdaten erzeugt wird,
wobei die Schlüsselergänzungsdaten des digitalen Freundschlüssels (7) die Aktivierung einer Alkoholtestfunktion (10) beschreiben oder darauf referenzieren,
wobei bei einer Benutzung des Fahrzeugs (5) mit dem digitalen Freundschlüssel (7) die Alkoholtestfunktion (10) aktiviert wird, wobei bei der Aktivierung der Alkoholtestfunktion (10) ein Alkoholtest des Nutzers mit dem Freundschlüssel (7) durchgeführt wird, wobei das Fahrzeug (5) in Abhängigkeit des Alkoholtests in einen Freigabezustand oder in einen Sperrzustand versetzt wird.

2. Verfahren nach Anspruch 1, **dadurch gekennzeichnet, dass** der Freigabezustand ein Starten und/oder Fahren des Fahrzeugs (5) ermöglicht und/oder dass der Sperrzustand ein Starten und/oder Fahren des Fahrzeugs (5) sperrt.

3. Verfahren nach Anspruch 1 oder 2, **dadurch gekennzeichnet, dass** der Sperrzustand Übernachtungsfunktionen des Fahrzeugs (5) ermöglicht.

4. Verfahren nach einem der vorhergehenden Ansprüche, **dadurch gekennzeichnet, dass** die Schlüsselergänzungsdaten auf ein Nutzerprofil für das Fahrzeug (5) verweisen, wobei die Alkoholtestfunktion (10) in dem Nutzerprofil definiert ist.

5. Verfahren nach einem der vorhergehenden Ansprüche, **dadurch gekennzeichnet, dass** der Alkoholtest mit einem Alkoholtestgerät (9) durchgeführt wird, welches in dem Fahrzeug (5) integriert ist.

6. Verfahren nach einem der Ansprüche 1 bis 4, **dadurch gekennzeichnet, dass** der digitale Freundschlüssel (7) auf einem mobilen Endgerät (7) gespeichert ist, wobei das mobile Endgerät (7) das Alkoholtestgerät (9) bildet oder mit diesem gekoppelt ist.

7. Verfahren nach Anspruch 6, **dadurch gekennzeichnet, dass** das mobile Endgerät (3) als Handy, Smartphone, Tablet, Wearable, Smart Watch etc. ausgebildet ist.

8. Verfahren nach Anspruch 6 oder 7, **dadurch gekennzeichnet, dass** das mobile Endgerät (3) über eine sicheren Verbindung (8) mit dem Fahrzeug kommuniziert, um ein Ergebnis des Alkoholtests zu übertragen, wobei die sichere Verbindung (8) durch den Freundschlüssel (7) autorisiert und/oder gesichert ist.

9. Verfahren nach Anspruch 8, **dadurch gekennzeichnet, dass** die sichere Verbindung über UWB, BLE und/oder NFC erfolgt.

10. Verfahren nach einem der vorhergehenden Ansprüche, **dadurch gekennzeichnet, dass** bei einem positiven Alkoholtest dem Nutzer des Fahrzeugs und/oder dem Besitzer des digitalen Besitzerschlüssels das Ergebnis des Alkoholtests gemeldet wird.

11. Fahrzeuganordnung (1)
mit einem Fahrzeug (5)
mit einem digitalen Benutzerschlüssel (4) und mit einem digitalen Freundschlüssel (7) mit Schlüsselergänzungsdaten,
wobei der digitale Freundschlüssel (7) auf Basis von dem digitalen Besitzerschlüssel (4) des Fahrzeugs (4) als ein digitaler Freundschlüssel (7) mit Schlüsselergänzungsdaten erzeugt ist,
wobei die Schlüsselergänzungsdaten des digitalen Freundschlüssels (7) die Aktivierung einer Alkoholtestfunktion (10) beschreiben oder darauf referenzieren,
wobei das Fahrzeug (5) ausgebildet ist, bei einer Benutzung des Fahrzeugs (5) mit dem digitalen Freundschlüssel (7) die Alkoholtestfunktion (10) zu aktivieren, wobei bei der Aktivierung der Alkoholtestfunktion (10) ein Alkoholtest durchgeführt wird, wobei das Fahrzeug (5) in Abhängigkeit des Alkoholtests in einen Freigabezustand oder in einen Sperrzustand versetzt wird.
